Europäisches Patentamt

**European Patent Office**

**Office européen des brevets**

(11) Numéro de publication: **0 119 368**
**A1**

(12) # DEMANDE DE BREVET EUROPEEN

(21) Numéro de dépôt: **83810091.5**

(51) Int. Cl.³: **C 02 F 1/48**

(22) Date de dépôt: **04.03.83**

(43) Date de publication de la demande: **26.09.84**
**Bulletin 84/39**

(84) Etats contractants désignés: **AT BE CH DE FR GB IT LI LU NL SE**

(71) Demandeur: **HYDRATEC S.A., 3, rue Hans Hugi, CH-2502 Bienne (CH)**

(72) Inventeur: **Petraglia, Donato, Les Pâquerettes 177, CH-2608 Courtelary (CH)**

(74) Mandataire: **Tordion, Serge, Cabinet de Conseil en brevets 23, rue du Marché-Neuf Case postale 182, CH-2500 Bienne 3 (CH)**

(54) Procédé de conditionnement de l'eau potable et appareil pour sa mise en oeuvre.

(57) Le conditionnement de l'eau est effectué après l'avoir fait circuler dans une enveloppe cylindrique (1) constituant un écran de protection magnétique, selon un chemin hélicoïdal conditionné par des déflecteurs (12, 13), autour d'une colonne centrale d'aimants permanents (8) montés en opposition avec interposition de plots (10) en fer doux dans une chemise (6) en matériau isolant électriquement. Le champ magnétique des aimants (8), qui est concentré dans des zones cylindriques autour des plots (10), enrichit l'eau dans les régions neutres magnétiquement, qui entourent les aimants (8), alternativement en ions positifs et en ions négatifs. Les macromolécules positives de $CaCO_3$, qui sont en suspension dans l'eau potable, traversent les régions enrichies en ions positifs sans modification; mais en passant dans les régions enrichies en ions négatifs, leur charge positive se neutralise graduellement au sein de l'eau et non plus sur les parois des conduites. Les germes de cristallisation qui peuvent en résulter sont alors emportés par l'eau. Le déséquilibre ionique ainsi produit dans l'eau réduit l'entartrage préexistant des conduites et des réservoirs. La disparition du tartre entraîne en grande partie celle des oxydations.

0119368

- 1 -

PROCEDE DE CONDITIONNEMENT DE L'EAU POTABLE

ET APPAREIL POUR SA MISE EN OEUVRE

Les dépôts de tartre qui se forment sur les parois des conduites de distribution de l'eau potable et sur celles des réservoirs domestiques remplis de cette eau sont composés en grande partie de carbonate de calcium ($CaCO_3$). Il semblerait même que la présence de ce sel dans l'eau soit la cause de l'entartrage des conduites et des réservoirs. L'explication donnée généralement de ce phénomène est fondée sur la constatation qu'une partie du $CaCO_3$ se trouve en solution colloïdale dans l'eau. Il se forme, en effet, des macromolécules de $CaCO_3$ présentant à leur surface une charge électrique positive. Dans l'eau ces macromolécules se repoussent, mais elles se neutraliseraient au contact des parois des conduites ou des réservoirs, où elles pourraient alors se réunir et former des germes de cristallisation.

Les procédés connus de conditionnement de l'eau, qui visent à éviter l'entartrage, prévoient de ce fait d'augmenter localement la concentration de ions négatifs afin de neutraliser électriquement ces macromolécules de $CaCO_3$ au sein même de l'eau, où elles peuvent dès lors se réunir et former des germes de cristallisation, qui sont emportés par le courant.

Pour augmenter localement la concentration des ions négatifs, les procédés connus utilisent des champs soit électriques soit magnétiques. La mise en oeuvre de ces procédés connus est toutefois compliquée. L'efficacité et le rendement des moyens utilisés pour atteindre le but recherché est cependant faible et la durée de vie des installations est souvent très limitée.

Le procédé défini par la revendication 1 a l'avantage de pouvoir être mis en oeuvre par des moyens aussi simples qu'efficaces, dont la durée de vie et le rendement sont élevés.

Chacune des paires de pôles adjacents des aimants de l'appareil défini par la revendication 2 produit, dans l'espace annulaire compris entre les aimants et l'enveloppe cylindrique de l'appareil, un champ magnétique dont les lignes d'induction sont concentrées dans une zone du dit espace annulaire qui est comprise pratiquement entre deux plans perpendiculaires à l'axe de l'enveloppe de l'appareil.

Comme les déflecteurs de cet appareil font circuler l'eau selon un chemin hélicoïdal autour des aimants, les ions véhiculés par l'eau subissent des forces qui sont perpendiculaires à l'induction magnétique, radiale, et à la ligne hélicoïdale qu'ils parcourent, lorsqu'ils traversent les dites zones, c'est-à-dire des forces qui ont une grande composante dans la direction générale de circulation de l'eau dans la conduite dans laquelle l'enveloppe de l'appareil est insérée. La dite composante de la force exercée sur un ion est d'autant plus grande que le pas de l'hélice parcourue par ce ion est petit.

Il s'ensuit qu'au passage de l'une des dites zones, les ions d'une polarité, qui sont véhiculés par l'eau, sont déviés vers l'amont et ceux de l'autre polarité, vers l'aval du courant d'eau circulant dans la dite conduite. Au passage à travers la zone suivante, les ions positifs et les ions négatifs seront déviés en sens inverses, puisque l'induction magnétique change de sens d'une zone à la suivante. Dans les espaces compris entre les dites zones, on aura ainsi alternativement un espace dans lequel il y aura une augmentation de la concentration des ions positifs, puis un espace dans lequel il y aura une augmentation de la concentration des ions négatifs.

En passant à travers l'un de ces derniers espaces, les macromolécules de $CaCO_3$ accrocheront un certain nombre de ions négatifs. En choisissant convenablement le nombre des aimants de l'appareil par rapport à la turbidité de l'eau, on obtient une neutralisation complète des macromolécules de $CaCO_3$. Ces molécules véhiculées par l'eau pourront donc s'agglomérer et former, au sein de l'eau, des germes de cristallisation qui seront emportés par l'eau, en évitant une précipitation sur les parois des conduites et des réservoirs.

La chemise en matière isolante, qui est définie dans la revendication 3, a l'avantage d'éviter que des courants électriques, passant incidemment dans l'eau, ne perturbent les aimants de l'appareil.

Quant aux plots définis par la revendication 4, ils permettent d'élever l'intensité du champ magnétique dans les dites zones jusqu'à l'ordre du Tesla, si leurs dimensions sont convenablement choisies par rapport à celles des aimants.

De son côté, l'enveloppe définie par la revendication 5 a l'avantage de soustraire les champs magnétiques, qui sont engendrés par les aimants de l'appareil dans les dites zones, aux influences perturbatrices des champs magnétiques extérieurs.

Enfin, les déflecteurs définis par les revendications 6 et 7 sont extrêmement simples. Leur fabrication ne soulève aucun problème; elle est rapide et bon marché. Ils fonctionnent sans accroc ni usure sensible.

Un exemple de mise en oeuvre du procédé selon l'invention est illustré dans le dessin annexé, qui représente schématiquement et à simple titre d'exemple une forme d'exécution de l'appareil selon l'invention.

La Fig. 1 est une coupe axiale de cette forme d'exécution.

La Fig. 2 en est une coupe transversale selon la ligne II-II de la Fig. 1.

La Fig. 3 en est une autre coupe transversale, selon la ligne III-III de la Fig. 1.

La Fig. 4 illustre le fonctionnement de l'appareil ainsi que le mode de mise en oeuvre du procédé selon l'invention.

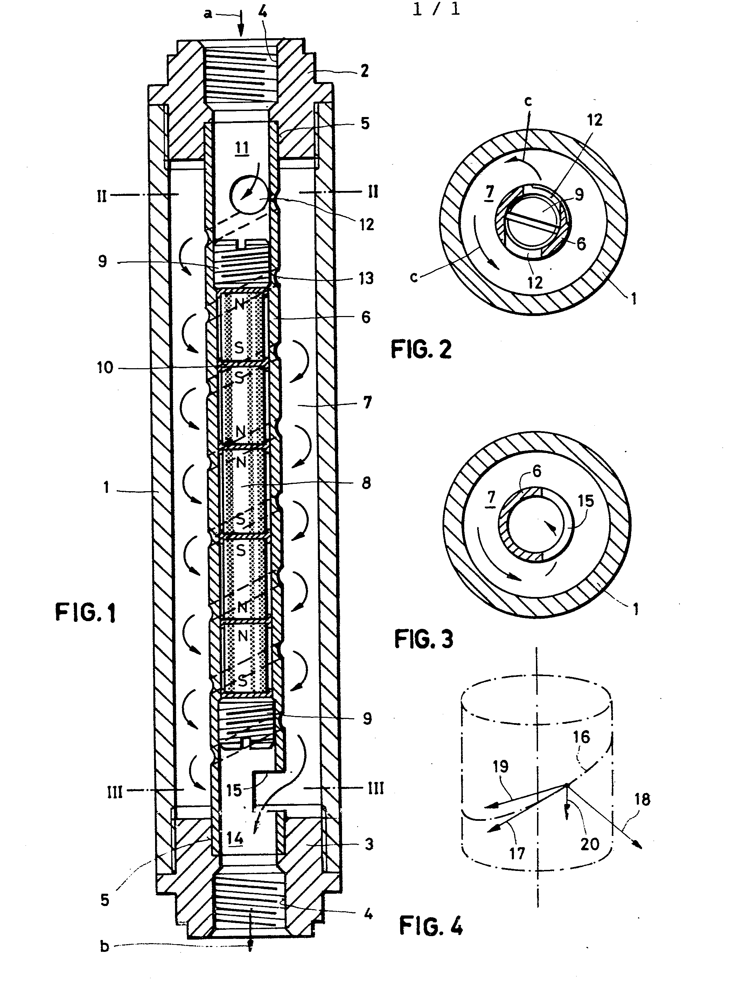

L'appareil représenté aux Fig. 1 à 3 comprend une enveloppe cylindrique 1, qui est faite en matière ferromagnétique, de façon à consti-

– 4 –

tuer une cage de Faraday empêchant les champs magnétiques extérieurs d'étendre leur induction à l'intérieur de l'enveloppe 1. Aux extrémités, respectivement d'entrée et de sortie, de l'enveloppe 1 sont vissés des embouts 2, 3 de façon que le joint entre ceux-ci et l'enveloppe 1 soit étanche.

Les embouts 2, 3 sont identiques. Ils présentent une ouverture centrale dont la partie externe 4 est taraudée, de façon à permettre l'insertion de l'appareil représenté dans une conduite (non représentée) d'un réseau de distribution d'eau potable. Les flèches a, b indiquent le sens de circulation de l'eau dans cette conduite. La partie interne 5 de l'ouverture centrale des embouts 2, 3 est alésée pour recevoir à frottement doux les extrémités d'une chemise cylindrique 6 en matière isolante électriquement. Les embouts 2, 3 maintiennent ainsi la chemise 6 dans une position parfaitement centrée à l'intérieur de l'enveloppe 1, en laissant entre cette chemise et l'enveloppe un espace libre 7, en forme de couronne cylindrique.

Une colonne d'aimants permanents 8, en forme de bâtonnets cylindriques, est fixée dans la chemise 6 par des bouchons étanches 9, qui sont aussi faits en matière isolante électriquement. Comme le montre la Fig. 1, les aimants 8 sont orientés de façon que les pôles en face l'un de l'autre de deux aimants adjacents soient de même nom. En raison de leur répulsion, l'induction dans l'espace 7 au voisinage de ces pôles est orientée radialement. Pour concentrer cette induction dans l'espace 7 pratiquement entre deux plans parallèles aussi rapprochés l'un de l'autre que possible, des plots en fer doux 10 sont insérés entre chaque paire d'aimants 8 adjacents. En choisissant convenablement les dimensions des plots 10 par rapport à celles des aimants 8, il est possible d'augmenter l'intensité de l'induction magnétique dans les zones de l'espace 7 qui entourent les plots 10 jusqu'à l'ordre du Tesla.

L'eau qui entre dans l'appareil représenté en passant à travers l'embout 2 arrive d'abord dans la chambre 11 qui est située à l'entrée de la chemise 6 et qui est délimitée par le bouchon 9. Elle en sort par les orifices 12 (Fig. 1 et 2). Comme il importe, pour des raisons expliquées ci-après, que cette eau traverse l'espace 7 en suivant un chemin hélicoïdal, l'appareil décrit est pourvu de déflecteurs. Un premier effet de déflection se produit au passage de l'eau à travers les orifices 12. La Fig.

2 montre, en effet, que les axes de ces orifices déflecteurs sont excentrés. Il s'ensuit que les jets d'eau sortant par les orifices 12 ont une direction tangentielle, comme les flèches c de la Fig. 2 l'indiquent.

En guise de déflecteur, la chemise 6 présente encore une rainure hélicoïdale 13 dans sa face extérieure. Les déflecteurs constitués ainsi par l'orientation des orifices 12 et par la rainure 13 suffisent à imprimer un chemin hélicoïdal à l'eau qui traverse l'espace 7, comme le montrent les flèches d dans la fig. 1.

A la sortie de cet espace, l'eau rentre dans la chambre 14, qui est située à la sortie de la chemise 6 et qui est délimitée par le bouchon 9 correspondant. A cet effet, un orifice d'entrée 15 (Fig. 1 et 3) est pratiqué dans la paroi de la chemise 6. Au lieu de la forme représentée à la Fig. 3, l'axe de cet orifice pourrait aussi être excentré, comme ceux des orifices 12.

L'eau potable des réseaux publics de distribution véhicule plusieurs impuretés. Elle contient principalement du carbonate de calcium ($CaCO_3$) et, en plus faible proportion, du gaz carbonique $CO_2$. De plus, cette eau n'est pas composée de molécules individuelles neutres. Ainsi, le gaz carbonique peut se combiner à l'eau et former de l'acide carbonique, qui peut à son tour se ioniser dans l'eau. L'eau elle-même peut être ionisée en partie. Enfin, une partie du carbonate de calcium contenu dans l'eau est ionisée, tandis qu'une autre partie est en solution colloïdale en ce sens qu'il se forme des macromolécules de carbonate de calcium, qui présentent une charge positive à leur surface.

Ce sont ces macromolécules que le procédé selon l'invention vise à neutraliser électriquement au sein de l'eau, afin qu'elles puissent s'agglomérer et former éventuellement des germes de cristallisation dans le courant d'eau et non plus sur les parois des conduites ou des réservoirs. Selon ce procédé, on fait passer l'eau dans des régions enrichies en ions négatifs, afin de neutraliser les macromolécules positives. Lorsque ces macromolécules ont été neutralisées, elles ne se repoussent plus; elles peuvent donc se grouper au sein de l'eau et former des germes de cristallisation qui seront emportés avec l'eau et ne s'accrocheront plus aux parois des conduites et des réservoirs.

- 6 -

L'appareil décrit atteint ce but de la façon illustrée à la Fig. 4. Comme expliqué précédemment, l'eau circule dans l'espace 7 selon un chemin hélicoïdal. Un ion qu'elle véhicule se déplace par conséquent le long de l'hélice 16 à une vitesse représentée par le vecteur 17. Au moment où il entre dans l'une des zones où règne une forte induction magnétique, indiquée par le vecteur 18, il subit une force dirigée perpendiculairement au plan des vecteurs 17, 18. Comme la composante 19 du vecteur 17 dans un plan perpendiculaire à l'axe de l'appareil est plus grande que la composante axiale 20, ce ion sera dévié soit en direction de l'entrée soit en direction de la sortie de l'enveloppe 1, selon sa polarité. Lorsque ce même ion passera à travers la prochaine zone où règne une induction magnétique, il sera dévié dans le sens opposé, puisque l'induction magnétique, représentée par le vecteur 18 change de sens d'une zone d'induction magnétique à la suivante.

La conséquence de cette action est que dans les régions de l'espace 17, qui sont magnétiquement neutres, il y aura alternativement une région enrichie en ions positifs et une région enrichie en ions négatifs. Or, on a pu constater qu'une macromolécule positive de carbonate de calcium ne subissait pas de modification en passant à travers une région riche en ions positifs. En revanche, lorsqu'elle passe dans une région riche en ions négatifs, elle en accroche quelques-uns.

Si le nombre des régions riches en ions négatifs que cette macromolécule doit traverser dans l'espace 7, qui dépend directement du nombre des aimants 8, est convenablement choisi en fonction du débit de l'eau et de la concentration du carbonate de calcium qu'elle contient, cette macromolécule sera complètement neutralisée électriquement lorsqu'elle aura traversé l'appareil décrit.

Les champs magnétiques des aimants 8 et le chemin que les déflecteurs 12, 13 font suivre à l'eau n'agissent pas uniquement sur le carbonate de calcium transporté par l'eau. Les ions négatifs qui ont été accrochés par des macromolécules de carbonate de calcium au passage à travers l'appareil décrit donnent naissance à un déséquilibre ionique dans l'eau qui sort de cet appareil. Ce déséquilibre se compense au passage à travers une conduite entartrée en détachant des ions négatifs de ce tartre, ce qui a pour effet d'en provoquer la dissolution.

On a aussi pu observer un effet similaire sur les oxydations des conduites, qui sont souvent dues à l'entartrage.

- 8 -

REVENDICATIONS :

1. Procédé de conditionnement de l'eau potable fournie par les canalisations d'un réseau, pour éviter les dépôts de tartre,
caractérisé
en ce que l'on fait passer l'eau d'une conduite de distribution de ce réseau à travers une succession de zones où règne un champ magnétique (18) orienté de façon qu'il exerce sur les ions qui sont véhiculés par l'eau, des forces qui ont une grande composante dans la direction générale de circulation de l'eau dans la dite conduite.

2. Appareil pour la mise en oeuvre du procédé selon la revendication 1,
caractérisé
- en ce qu'il comprend, dans une enveloppe cylindrique (1) insérée dans une conduite d'amenée d'eau, une colonne d'aimants permanents (8), cylindriques, coaxiaux à cette enveloppe et disposés de façon que les pôles adjacents de deux aimants successifs soient de même nom
- et en ce que des déflecteurs (12, 13) font circuler l'eau selon un chemin hélicoïdal (16) autour de la dite colonne d'aimants.

3. Appareil selon la revendication 2,
caractérisé
en ce que les dits aimants (8) sont empilés dans une chemise (6) en matière isolante électriquement, dont les extrémités sont engagées dans des embouts (2, 3) fermant les extrémités de la dite enveloppe.

4. Appareil selon la revendication 3,
caractérisé
en ce que les dits aimants sont séparés les uns des autres par des plots cylindriques (10) en matière ferromagnétique, de dimensions déterminées par rapport à celles des aimants (8).

5. Appareil selon la revendication 2 ou la revendication 3 ou la revendication 4,
caractérisé
en ce que la dite enveloppe (1) est faite en une matière qui en isole magnétiquement l'intérieur.

6.     Appareil selon la revendication 3 ou la revendication 4 ou la revendication 5,

caractérisé

en ce que les dits déflecteurs comprennent une rainure hélicoïdale (13) formée dans la paroi externe de la dite chemise (6).

7.     Appareil selon la revendication 6,

caractérisé

- en ce qu'il reçoit l'eau à son entrée dans une extrémité (11) de la dite chemise (6), qui est séparée des aimants (8) par un bouchon (9) et qui présente un orifice latéral (12) dont l'axe est excentré de façon à produire, dans la dite enveloppe (1), un jet d'eau dirigé tangentiellement

- et en ce qu'à sa sortie, l'eau passe de la dite enveloppe dans l'autre extrémité (14) de la dite chemise (6) à travers un orifice (15) dont l'axe est tangentiel au courant d'eau circulant dans l'espace annulaire (7) compris entre la dite enveloppe et la dite chemise.

0119368

1 / 1

FIG. 1

FIG. 2

FIG. 3

FIG. 4

0119368

# RAPPORT DE RECHERCHE EUROPEENNE

Office européen
des brevets

Numéro de la demande

EP 83 81 0091

## DOCUMENTS CONSIDERES COMME PERTINENTS

| Catégorie | Citation du document avec indication, en cas de besoin, des parties pertinentes | Revendication concernée | CLASSEMENT DE LA DEMANDE (Int. Cl. 3) |
|---|---|---|---|
| X | US-A-4 216 092 (W.N. SHALHOOB et al.) <br> * En entier * | 1-7 | C 02 F 1/48 |
| X | US-A-4 366 053 (CLINDLER) <br><br> * En entier * | 1-3,5-7 | |
| X | US-A-2 825 464 (S.S. MACK) <br><br> * En entier * | 1-3,5-7 | |
| A | US-A-3 923 660 (M.F. KOTTMEIR) <br> * En entier * | 1-7 | |
| A | US-A-4 265 746 (G.M. ZIMMERMAN, SR. et al.) <br> * En entier * | 1-7 | |

DOMAINES TECHNIQUES RECHERCHES (Int. Cl. 3)

C 02 F

Le présent rapport de recherche a été établi pour toutes les revendications

| Lieu de la recherche | Date d'achèvement de la recherche | Examinateur |
|---|---|---|
| LA HAYE | 04-11-1983 | VAN AKOLEYEN H.T.M. |

CATEGORIE DES DOCUMENTS CITES

X : particulièrement pertinent à lui seul
Y : particulièrement pertinent en combinaison avec un autre document de la même catégorie
A : arrière-plan technologique
O : divulgation non-écrite
P : document intercalaire

T : théorie ou principe à la base de l'invention
E : document de brevet antérieur, mais publié à la date de dépôt ou après cette date
D : cité dans la demande
L : cité pour d'autres raisons

& : membre de la même famille, document correspondant

OFR Form 1503 03.82